Europäisches Patentamt

European Patent Office

Office européen des brevets

(19)

(11) Publication number: **0 031 610**
A2

(12) **EUROPEAN PATENT APPLICATION**

(21) Application number: **80201155.1**

(22) Date of filing: **04.12.80**

(51) Int. Cl.³: **E 01 H 12/00, C 09 K 3/32**
**// E02B15/04**

(30) Priority: **26.12.79 US 107192**

(43) Date of publication of application: **08.07.81**
**Bulletin 81/27**

(84) Designated Contracting States: **BE FR GB IT NL SE**

(71) Applicant: **SHELL INTERNATIONALE RESEARCH MAATSCHAPPIJ B.V., Carel van Bylandtlaan 30, NL-2596 HR DEN HAAG (NL)**

(72) Inventor: **Ayers, Ray Rolland, 12431 Honeywood Trail, Houston Texas (US)**

(74) Representative: **Keuzenkamp, Abraham et al, P.O. Box 302, NL-2501 CH Den Haag (NL)**

(54) **Method and apparatus for removing oil from a shoreline.**

(57) The present invention pertains to a method and apparatus for removing oil from a shoreline 20 with an endless belt 12 which is oil-sorbent by pressing a surface of the belt 12 into contact with a surface of the shoreline bearing the oil, moving the belt along the shoreline, revolving the belt 12 in the direction of movement of the vehicle 10 along the shoreline 20, adjusting the rate of revolving the belt 12 to the rate of moving the belt 12 along the shoreline 20 to achieve approximately zero relative velocity between the belt surface and the contacting shoreline surface, sorbing oil with the belt 12 from the shoreline 20 and continuously removing sorbed oil from the belt 12.

## METHOD AND APPARATUS FOR REMOVING
## OIL FROM A SHORELINE

The invention relates to shoreline restoration and particularly to a method and apparatus for removing oil from a shoreline.

Conventional floating oil skimmers will not work for recovering spilled oil from shorelines, and sorbent means, such as loose sorbents, mats, or rope-belts, must be used when the water adjacent the shore is shallow or if tides make it so for part of the time. Loose sorbents offer problems of a) being lost before being recovered, b) clogging in nearby floating skimmers, and c) disposing after use. Sorbent mats minimize items a) and b), but still must be disposed. Loose sorbents, mats and rope-belts are all of limited use when miles of shoreline are contaminated because the total cost per mile of shore cleaned is high. Materials cost, particularly for non-re-usable sorbents, are high and application, removal and disposal operations are labour- and equipment-intensive.

The shore side of the land-water interface is also a problem to protect from approaching oil and to restore once contaminated. Principal physical means to protect shorelines from further contamination and to restore shorelines have historically consisted of a) applying sorbents to compete with shore sorption processes, b) removing and disposing of affected surfaces with earth moving equipment, and c) turning and mixing the soil to hide and disperse the contaminated materials.

A critical analysis of using sorbent mats reveals that there are possible problems with anchoring, water sorption, re-use, disposal, as well as cost and availability in large quantities. An advantage of such mats is that the sorbent as well as the sorbed oil can be immobilized by using such a blanket. Use of earth moving equipment also has disadvantages. Such equipment is better suited to beaches as contrasted with marshes, but disposal still remains a problem. Also, removing large quantities of shore materials can disturb the complex balance of beach materials and can cause the beach/shoreline area to be reduced through natural process reactions to a man-made disturbance. Unfortunately, such mechanical equipment will, in the process of restoring shorelines, cause damage to growing things in its way.

The present invention solves the above problems by providing a method and apparatus wherein an endless belt which is oil-sorbent is applied for removing oil from a shoreline.

More particularly, the present invention pertains to a method for removing oil from a shoreline with an endless belt which is oil-sorbent, comprising, pressing a surface of the belt into contact with a surface of the shoreline bearing the oil, moving the belt along the shoreline, revolving the belt in the direction of movement along the shoreline, adjusting the rate of revolving the belt to the rate of moving the belt along the shoreline to achieve approximately zero-relative velocity between the belt surface and the contacting shoreline surface, sorbing oil with the belt from the shoreline, and continuously removing sorbed oil from the belt. The endless belt may be transported in a suitable manner by a tracked vehicle, wherein the belt is suspended between the tracks of the vehicle. Alternatively, the belt can be pressed against the shoreline by tires above the sorbent material, so that the belt(s) acts/act as tractor treads. A suitable type of an endless belt is a sorbent material having a turf-like surface.

The apparatus of the present invention for removing oil from a shoreline comprises an endless belt which is oil-sorbent, means for pressing a surface of the belt into contact with a surface of the shoreline bearing the oil, means for moving the belt along the shoreline, means for revolving the belt in the direction of movement along the shoreline, and means for adjusting the rate of revolving the belt to the rate of moving the belt along the shoreline to achieve approximately zero relative velocity between the belt surface and the contacting shoreline surface.

The present invention will now be described in more detail with reference to the accompanying drawings in which

Figure 1 is a plan view of the apparatus of the present invention.

Figure 2 is a centre section profile along section 2-2 of Figure 1.

Figure 3 is a tracked pontoon profile along section 3-3 of Figure 1.

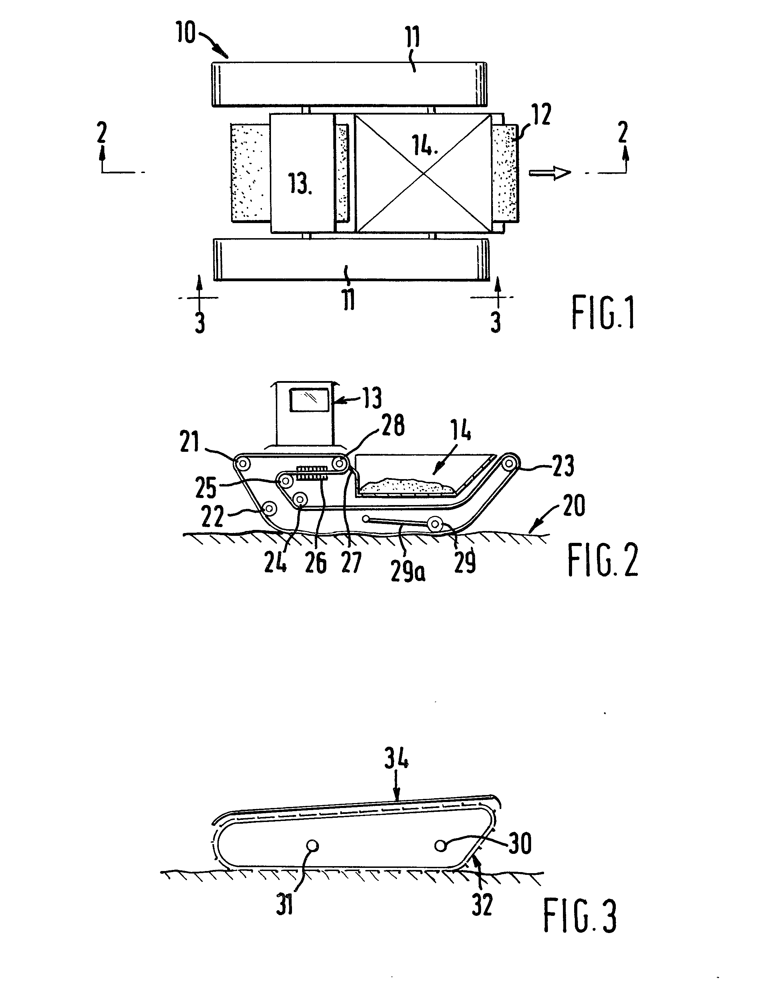

The shoreline restoration/clean-up device of the present invention comprises a wide, endless, suspended sorbent belt that "walks" on water or land, recovering oil and oil-covered materials that cling to it. This sorbent belt may be suspended in a suitable manner between the hulls of a tracked catamaran marsh vehicle which is amphibious. This is more particularly shown in Figure 1 which discloses a vehicle 10 propelled by tracked pontoons 11 between which is suspended the oil sorbent belt 12 and over which are located a control compartment 13 and an oil and recovered materials container 14.

As shown in Figure 2, which is a centre section profile along section 2-2 of Figure 1, the vehicle 10 rides over an oil-covered shore 20 by means of the tracked pontoons 11. The belt 12 is maintained in position and propelled by a series of guide rollers such as rollers 21 and 22 at the front of the vehicle 10 and rollers 23 at the rear of the vehicle 10. Rollers 24 and 25 guide the belt 12 into a wringer drive device 26 which propels the belt 12 past a scraper 27 and onto a take-up reel 28. Oil or other debris from the wringer drive 26 and scraper 27 is collected into the oil and recovered materials container 14. The lowermost rear section of the belt 12 is maintained in contact with the oil-covered shore 20 by means of a pressure idler 29 hinged by a leveraged arm 29a.

A profile of the vehicle along section 3-3 of Figure 1 is shown in Figure 3 and discloses axles 30 and 31 for driving the moving tracks 32 protected by cover 34. It is manifest that this particular vehicle is but one of various types of means which can be employed to propel the revolving belt overland and provide a zero rate of velocity between the belt 12 and the contacting shore 20.

The revolving belt of the present invention may suitably be constructed of polypropylene-felt lamination having nylon bristles. If the oil to be recovered is quite viscous, the felt material may be eliminated.

The belt speed may be automatically controllable to effect a low-relative velocity condition of the belt with respect to the land, if on land, and the water, if on water.

The belt will remove oil and oil-soaked materials clinging to it as the belt is withdrawn from the shore surface or water. The collected oil and materials can be removed by brushing, scraping, and wringing and temporarily stored in batch for jettisoning or otherwise disposing when appropriate. Additional conventional equipment is required to retrieve and dispose of piled or bagged recovered materials dropped off by the shore recovery device. A drive mechanism is used to grip, wring, and propel the belt. Small diameter roller wringers like that used in old-fashioned washing machines are not useful for high speed wringing because excessive pore pressures cause ineffective wringing and structural failures of the belt and wringer.

Often oil and water-borne debris accumulate at the same shore areas. The present invention allows debris that cannot be lifted by adhesion to pass under it either on land or on water. In this way, inordinate quantities of large debris need not be handled, and the oil and oil-soaked materials recovery does not become a debris recovery procedure for which other techniques are available.

5

While the apparatus of this invention uses no chemicals, it is compatible with surface-active agents (e.g., a mixture of neodol alcohol and butyl oxitol) but not necessarily with dispersants. Since the present invention is an "endless" sorbent blanket, it has a higher harvesting rate and greater mobility than "passive" blankets. Also, the self-contained operations of oil absorption/extraction and storage occur simultaneously and almost continuously, not like a sorbent blanket. Unlike using "loose" sorbents, the sorbent of this device is always under control and recoverable.

While the apparatus of this invention will not, in most cases, totally clean a shoreline of oil, it will, however, harvest sticky oil and oiled particles from beaches, remove free oil from marshes and remove floating oils and clinging particles from debris-contaminated shoreline waters.

CLAIMS

1. A method for removing oil from a shoreline with an endless belt which is oil-sorbent, comprising, pressing a surface of the belt into contact with a surface of the shoreline bearing the oil, moving the belt along the shoreline, revolving the belt in the direction of movement along the shoreline, adjusting the rate of revolving the belt to the rate of moving the belt along the shoreline to achieve approximately zero relative velocity between the belt surface and the contacting shoreline surface, sorbing oil with the belt from the shoreline, and continuously removing sorbed oil from the belt.

2. Method according to claim 1, wherein the endless belt is transported by a tracked vehicle and the belt is suspended between the tracks of the vehicle.

3. Method according to claim 1, wherein the endless belt is transported by an amphibious vehicle having tracked pontoons and is suspended between the pontoons.

4. Method according to any one of the claims 1-3, wherein the endless belt is transported by a vehicle having onboard storage for oil removed from the belt.

5. Method according to any one of the claims 1-4, wherein the endless belt is deployed from a vehicle by guide rollers which revolve the belt and is maintained in contact with the surface of the shoreline by at least one idler roller to which pressure is applied.

6. Method according to any one of the claims 1-5, wherein the endless belt is a sorbent material which is sufficiently thick and flexible to sorb oil from reasonably flat shoreline surface without significant loss of efficiency.

7. Method according to any one of the claims 1-6, wherein the endless belt is a sorbent material having a turf-like surface.

8. Method according to any one of the claims 1-7, including spraying the shore with a surface-active agent to prevent incoming oil from being absorbed on-shore.

7

9. An apparatus for removing oil from a shoreline, comprising, an endless belt which is oil-sorbent, means for pressing a surface of the belt into contact with a surface of the shoreline bearing the oil, means for moving the belt along the shoreline, means for revolving the belt in the direction of movement along the shoreline, and means for adjusting the rate of revolving the belt to the rate of moving the belt along the shoreline to achieve approximately zero relative velocity between the belt surface and the contacting shoreline surface.

10. Apparatus according to claim 9, wherein the means for moving the belt along the shoreline is a tracked vehicle, and the belt is suspended between the tracks of the vehicle.

11. Apparatus according to claim 9 or 10, wherein the endless belt is an oil-sorbent material having a turf-like surface.

FIG.1

FIG.2

FIG.3